# EUROPEAN PATENT SPECIFICATION

(11) **EP 3 088 111 B1**
(45) Date of publication and mention of the grant of the patent: **01.09.2021**
(21) Application number: 14873371.0
(22) Date of filing: 17.12.2014
(51) Int. Cl.: B23B 51/00, B23B 27/16

(54) **DRILL INSERT AND INDEXABLE DRILL**
BOHREINSATZ UND INDEXIERBARER BOHRER
PIÈCE RAPPORTÉE DE MÈCHE ET MÈCHE INDEXABLE

(30) Priority: 26.12.2013 JP 2013270205
(43) Date of publication of application: 02.11.2016
(73) Proprietor: Mitsubishi Materials Corporation, Chiyoda-ku Tokyo 100-8117 (JP)
(72) Inventor: SATO Takahiro, Joso-shi Ibaraki 300-2795 (JP); HAYASHIZAKI Hiroaki, Joso-shi Ibaraki 300-2795 (JP)
(74) Representative: Hoffmann Eitle
(86) International application number: PCT/JP2014/083386
(87) International publication number: WO 2015/098646

(56) References cited:
- EP-A1- 0 654 317
- EP-A1- 2 489 453
- JP-A- H10 315 023
- JP-A- S61 209 806
- JP-A- 2008 080 483
- JP-A- 2009 178 787
- JP-A- 2012 171 040
- JP-A- 2012 525 987
- US-A- 5 771 763
- US-A1- 2013 101 365
- DATABASE WPI Week 200645 Thomson Scientific, London, GB; AN 2006-437983 XP002771319, -& JP 2006 159381 A (YAMAHA MOTOR CO LTD) 22 June 2006 (2006-06-22)

## Description

### Technical Field

The present invention relates to a drill insert according to the preamble of claim 1 which is detachably attached to a distal portion of a drill body of a cutting edge replacement type drill, and a cutting edge replacement type drill to which the drill insert is detachably attached. Such a drill insert and such a cutting edge replacement type drill are known from US 2013/0101365 A1.

### Background Art

As the drill insert and the cutting edge replacement type drill, a drill insert is disclosed in PTL 1, in which cutting blades are formed on one pair of side ridge portions continuous with one apex of rake face forming a polygon of a polygonal flat plate-shaped insert body, an inner circumferential side chip breaker protrudes from the rake face continuous with one of the cutting blades, and an outer circumferential side chip breaker which is recessed from the rake face is formed on the other one of the cutting blades.

In the drill insert disclosed in PTL 1, the drill inserts having the same shape and the same size as each other are attached to the inner circumferential side and the outer circumferential side of the distal portion of a drill body, the cutting blade on which the inner circumferential side chip breaker is formed is used for drilling in the inner circumferential side drill insert, and the cutting blade on which the outer circumferential side chip breaker is formed is used for drilling in the outer circumferential side drill insert.

In addition, PTL 2 discloses a drill insert, in which the drill insert, which is attached to the inner circumferential side of the distal portion of a drill body out of drill inserts attached to the inner circumferential side and the outer circumferential side of the distal portion of the drill body, is set to a central insert, and a rake angle of an operating edge (cutting blade) of the square central insert increases in a rotation axis of a drill in a region in which the inner circumferential drill insert and the outer circumferential drill insert overlap each other. In the drill insert disclosed in PTL 2, a chamfered edge (negative land) is formed on the cutting blade on the rotation axis, and has a negative angle of approximately 15°.

### Citation List

### Patent Literature

[PTL 1] Japanese Patent No. 3022002
[PTL 2] Japanese Patent No. 4394180

### Summary of Invention

### Technical Problem

However, for example, as disclosed in PTL 2, in the cutting edge replacement type drill, a circumferential speed by the rotation of the drill body decreases from the outer circumferential side of the drill body toward the inner circumferential side, and the circumferential speed and a cutting speed on the rotation axis of the drill body become zero. Accordingly, in the drill insert attached to the inner circumferential side of the drill body, particularly, the cutting blade cuts a workpiece while squeezing the workpiece in the vicinity of the rotation axis, and a cutting load or cutting resistance increases.

However, in the drill insert disclosed in PTL 1, when the inner circumferential side drill insert is used for cutting, only the flat rake face is formed between one cutting blade disposed in the vicinity of the rotation axis and the inner circumferential side chip breaker. Accordingly, strength of the cutting blade is insufficient, and it is difficult to ensure sufficient chipping resistance with respect to a large cutting load or large cutting resistance.

Meanwhile, in the drill insert and the cutting edge replacement type drill disclosed in PTL 2, the negative land having the negative angle is formed on the cutting blade on the rotation axis of the drill body, and a certain degree of strength of the cutting blade can be ensured. However, the breaker groove is formed on the rake face on the inner circumferential side of the drill body slightly separated from the rotation axis, and the rake angle has a positive angle within a range of 5° to 20°. Accordingly, similarly to the drill insert disclosed in PTL 1, it is difficult to ensure chipping resistance.

In addition, in a case where a workpiece to be drilled is formed of stainless steel or the like, particularly, as described above, in the vicinity of the rotation axis of the drill body in which the cutting blade performs cutting while squeezing the workpiece, welding of scraps or chips easily occurs on the cutting edge of the cutting blade due to an increase of cutting heat according to the increase of the cutting resistance. Accordingly, when weld deposits are peeled due to the welding, the cutting blade may be damaged. Particularly, as the drill insert disclosed in PTL 2, if the negative land is formed on the cutting blade on the rotation axis of the drill body, since the cutting resistance increases and the cutting heat increases even though the strength of the cutting blade can be ensured, damage due to the welding easily occurs.

The present invention is made in consideration of the above-described circumstances, and an object thereof is to provide a drill insert which is attached to the inner circumferential side of the distal portion of the drill body, particularly, can ensure sufficient chipping resistance with respect to a cutting load or cutting resistance, and can prevent damage due to the welding, and a cutting edge replacement type drill which is detachably attached to the drill insert.

### Solution to Problem

In order to solve the above-described problems and achieve the object, according to the present invention, there is provided a drill insert according to claim 1 which is detachably attached to a distal portion of a drill body which is rotated around an axis, in which a polygon face of a polygonal plate-shaped insert body is a rake face, a side face of the insert body disposed around the rake face is a flank face, and a cutting blade is formed on a ridge portion in which the rake face and the flank face intersect each other. In addition, the cutting blade includes a honing face which is formed on a first cutting blade portion continuous with at least one end portion of both end portions of the cutting blade and which gradually rises from the flank face toward the rake face, the honing face includes a first convex curved face continuous with the rake face and a second convex curved face continuous with the flank face, and in a cross section orthogonal to the cutting blade, a curvature radius of the first convex curved face is larger than a curvature radius of the second convex curved face.

In addition, according to the present invention, there is provided a cutting edge replacement type drill according to claim 5, in which the drill insert according to the invention is detachably attached to a distal portion of a drill body which is rotated around an axis such that the cutting blade protrudes from the distal end of the drill body, the one end portion of the cutting blade is positioned in the vicinity of the axis and the other end portion of both end portions of the cutting blade is positioned on the outer circumferential side of the drill body when viewed from a rotation direction of the drill body, and the first cutting blade portion and the axis intersect each other.

Accordingly, in the drill insert having the above-described configuration which is attached to the drill body, the first cutting blade portion, on which a negative honing face gradually rising from the flank face of the cutting blade toward the rake face is formed, is positioned in the vicinity of the axis of the inner circumferential side of the drill body. Therefore, since a lip angle of the first cutting blade portion can increase and the honing face includes the first convex curved face continuous with the rake face and the second convex curved face continuous with the flank face, it is possible to ensure strength of the cutting blade in an intersection ridge portion between the honing face substantially functioning as the edge of the cutting blade and the flank face, by the second convex curved face, and it is possible to obtain sufficient chipping resistance with respect to a cutting load or cutting resistance.

Meanwhile, the first convex curved face, which has the curvature radius larger than that of the second convex curved face and has an arc gentler than that of the second convex curved face, is formed on the rake face side of the honing face, and it is possible to decrease resistance when scraps or chips scratch. Accordingly, even though a workpiece is stainless steel or the like, it is possible to prevent occurrence of welding due to an increase of cutting heat in the first cutting blade portion positioned on the inner circumferential side of the drill body, and it is possible to prevent damage of the cutting blade due to the welding.

Here, the first cutting blade portion may have a length which is 1/2 or more of a length of the cutting blade. Accordingly, it is possible to reliably ensure the chipping resistance in a portion in which the cutting load or the cutting resistance increases in the vicinity of the axis when the drill insert is attached to the drill body. That is, if the length of the first cutting blade portion on which the honing face having the first and second convex curved faces is formed is less than 1/2 of the length of the cutting blade, there is a concern that it is not possible to reliably ensure the chipping resistance on the other end portion side of the cutting blade rather than the first cutting blade portion according to the applied cutting load or the cutting resistance.

In addition, a breaker groove which has a bottom surface continuous with the honing face may be formed on the rake face, and the bottom surface of the breaker groove may be formed so as to be inclined to gradually retreat as the bottom surface is separated from the honing face. Accordingly, it is possible to prevent the cutting resistance from increasing more than is needed by the honing face rising in a negative shape.

Since the first cutting blade portion having a sufficient length can be ensured on the inner circumferential side of the drill body, a positive land which gradually retreats from the flank face side toward the rake face is formed on a second cutting blade portion continuous with the other end portion of both end portions of the cutting blade, preferably on the outer circumferential side of the drill body in which a cutting speed increases in the cutting blade protruding from the distal end of the drill body. Accordingly, it is possible to further decrease the cutting resistance by increasing sharpness of the cutting blade.

However, in a case where the second cutting blade portion having the land is provided on the other end portion side of the cutting blade, particularly, in a case where a workpiece such as stainless steel is drilled, preferably, a third convex curved face is formed between the flank face and the land of the second cutting blade portion to ensure the strength of the cutting blade. In addition, in the cross section orthogonal to the cutting blade, a curvature radius of the third convex curved face may be smaller than the curvature radius of the first convex curved face. Accordingly, it is possible to prevent the cutting resistance from increasing more than is needed while ensuring sufficient chipping resistance in the second cutting blade portion.

### Advantageous Effects of Invention

As described above, according to the present invention, it is possible to ensure sufficient chipping resistance with respect to the cutting load or the cutting resistance applied to the cutting blade in the vicinity of the axis of the drill body, and it is possible to prevent damage due to welding in a case where a workpiece such as stainless steel is drilled.

### Brief Description of Drawings

Fig. 1 is a perspective view showing a first embodiment of a drill insert of the present invention.
Fig. 2 is a plan view of the embodiment shown in Fig. 1.
Fig. 3 is a side view of the embodiment shown in Fig. 1.
Fig. 4 is a sectional view taken along line X-X in Fig. 2.
Fig. 5 is a sectional view taken along line Y-Y in Fig. 2.
Fig. 6 is a sectional view taken along line Z-Z in Fig. 2.
Fig. 7 is an enlarged sectional view of a lower cutting blade (first cutting blade portion) in Fig. 4.
Fig. 8 is an enlarged sectional view of a lower cutting blade (second cutting blade portion) in Fig. 6.
Fig. 9 is a plan view of a distal portion of a drill body showing an embodiment of a cutting edge replacement type drill of the present invention to which the drill insert of the embodiment shown in Figs 1 to 8 is attached.
Fig. 10 is a front view of the cutting edge replacement type drill shown in Fig. 9.
Fig. 11 is a side view of the cutting edge replacement type drill shown in Fig. 9.
Fig. 12 is a bottom view of the cutting edge replacement type drill shown in Fig. 9.
Fig. 13 is a perspective view showing a second embodiment of a drill insert of the present invention.
Fig. 14 is a plan view showing the embodiment shown in Fig. 13.
Fig. 15 is a side view of the embodiment shown in Fig. 13.
Fig. 16 is a sectional view taken along line X-X in Fig. 14.
Fig. 17 is a sectional view taken along line Y-Y in Fig. 14.
Fig. 18 is a sectional view taken along line Z-Z in Fig. 14.

### Description of Embodiments

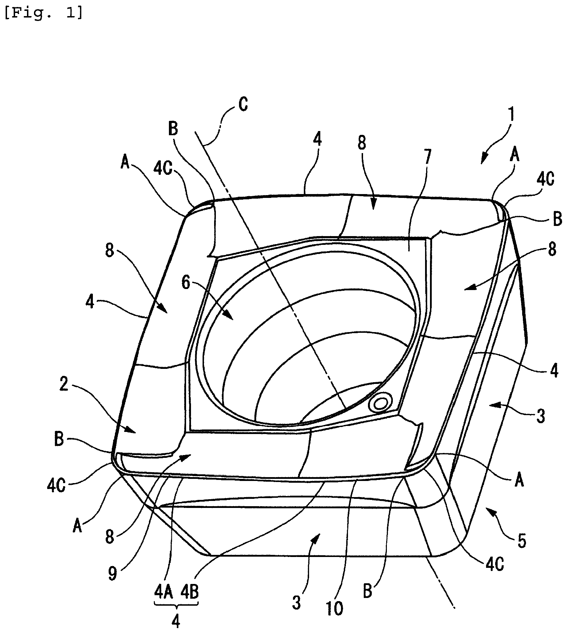

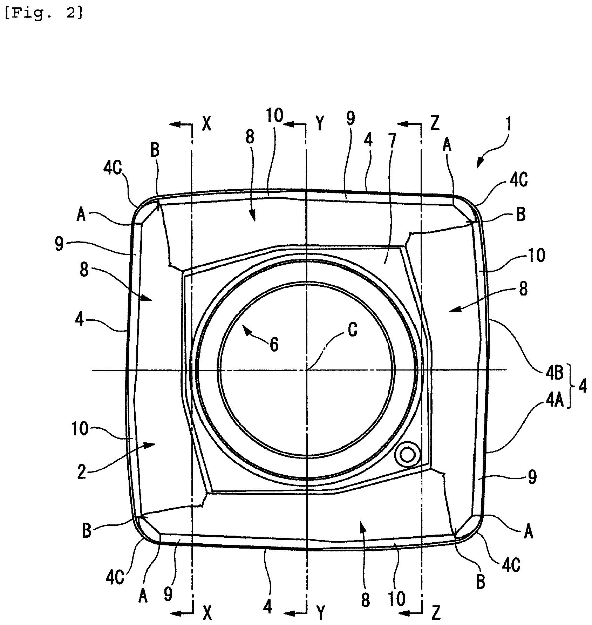

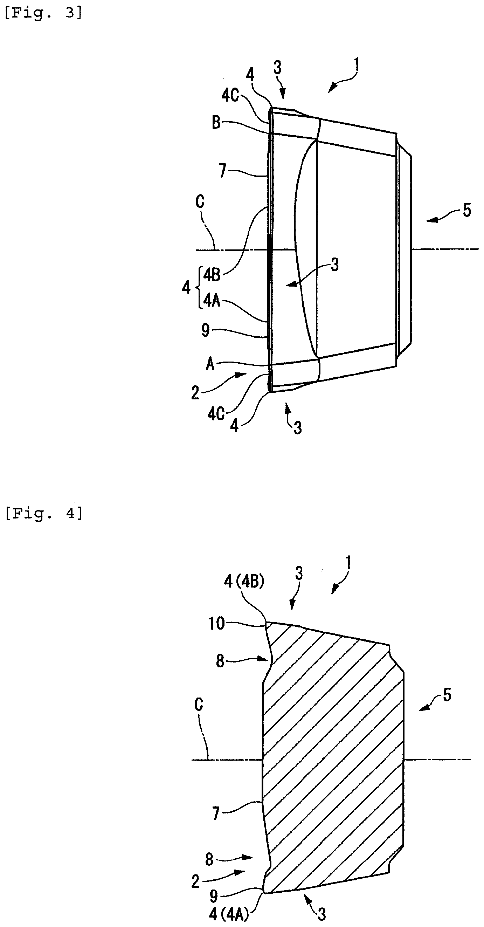

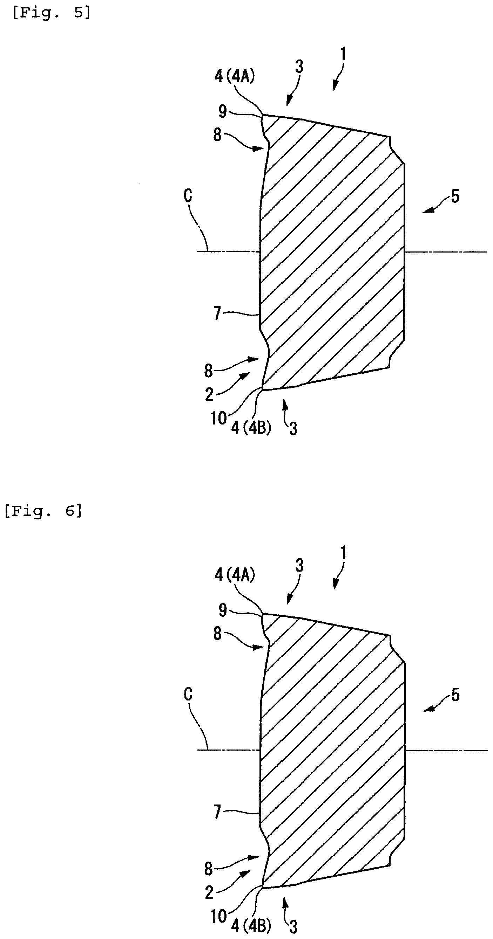

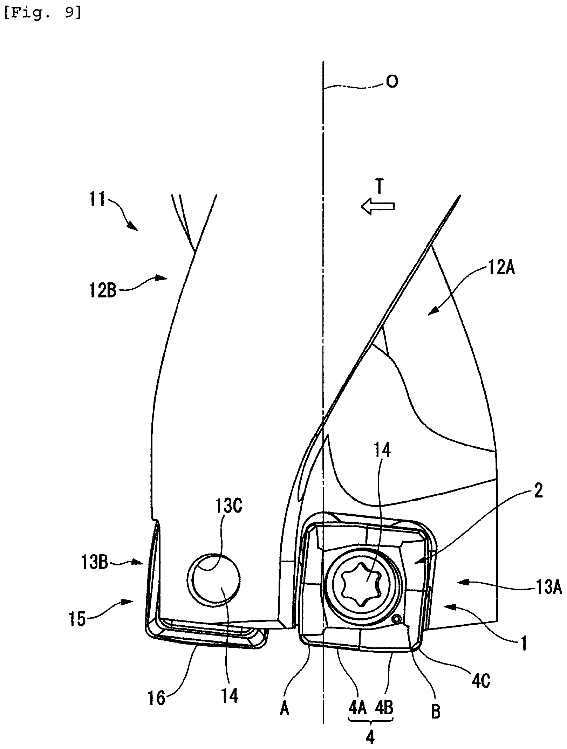

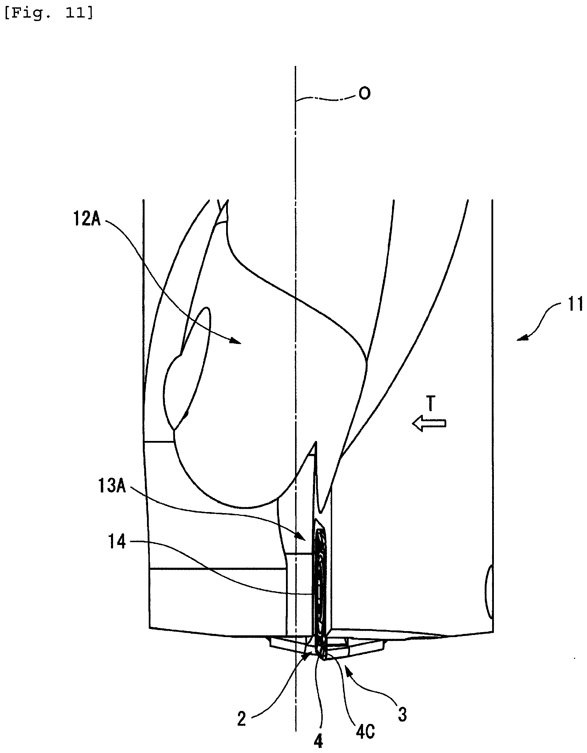

Figs. 1 to 8 show a first embodiment of a drill insert of the present invention, Figs. 9 to 12 show an embodiment of a cutting edge replacement type drill of the present invention to which the drill insert of the first embodiment is attached. In the drill insert of the present embodiment, an insert body 1 is formed in a polygonal plate shape using a hard material such as sintered hard alloy, and specifically, in the present embodiment, the drill insert is formed in an approximately square plate shape.

### AMENDMENTS FOR PROSECUTION IN THE EPO REGIONAL PHASE

One square surface of the insert body 1 is a rake face 2, four side faces which are disposed around the rake face 2 are flank faces 3, and a cutting blade 4 is formed on each of intersection ridge portions between the rake face 2 and the four flank faces 3. In addition, the other square surface of the insert body 1 is a seating face 5, and an attachment hole 6 penetrating the insert body 1 is formed from the center of the rake face 2 to the center of the seating face 5. The insert body 1 is formed so as to be rotationally symmetrical for each 90° around an insert center line C passing through the center of the attachment hole 6, and the seating face 5 is a flat face perpendicular to the insert center line C.

In addition, each of the flank faces 3 is inclined so as to gradually retreat toward the inside of the insert body 1 from the cutting blade 4 toward the seating face 5 in the direction of the insert center line C, a clearance angle is formed on the cutting blade 4, and the drill insert of the present embodiment is a positive type insert. In addition, the flank face 3 is inclined to retreat toward the inside of the insert body 1 so as to have a plurality of steps from the cutting blade 4 toward the seating face 5.

A planar boss face 7 perpendicular to the insert center line C is formed around the attachment hole 6 in the center of the rake face 2, and the boss face 7 is positioned so as to most protrude from the rake face 2 in the direction of the insert center line C. In addition, breaker grooves 8 are formed over the entire circumference of the rake face 2 around the boss face 7, and each of the breaker groove 8 has a bottom surface 8A which is recessed to be inclined so as to gradually retreat in the direction of the insert center line C toward the inside of the rake face 2, and thereafter, is cut upward so as to rise via the concave curved face.

Meanwhile, when the insert body 1 is attached to a distal portion of a drill body 11 described below, the cutting blades 4 are disposed such that one of the four cutting blades 4 protrudes from the distal end of the drill body 11 and extends from the vicinity of an axis O on the inner circumferential side of the drill body 11 to the outer circumferential side, the end portion of the cutting blade 4 positioned in the vicinity of the axis O is one end portion A, and the end portion positioned on the outer circumferential of the drill body 11 is the other end portion B. Moreover, in the cutting blade 4, a portion continuous with the one end portion A is a first cutting blade portion 4A, a portion continuous with the other end portion B is a second cutting blade portion 4B, and the second cutting blade portion 4B is formed in a convex curve shape having a large curvature radius, a linear shape, or a combination thereof while the first cutting blade portion 4A linearly extends when viewed in a direction facing the rake face 2 in the direction of the insert center line C.

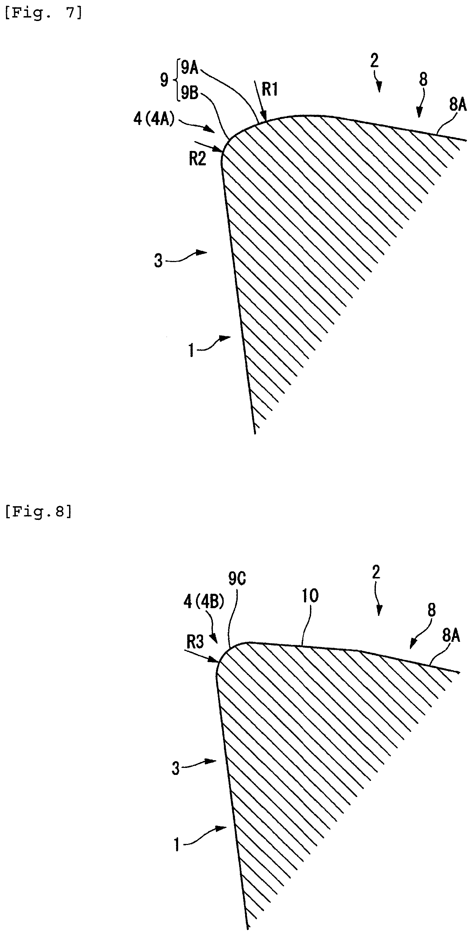

In addition, in the first cutting blade portion 4A, round honing is performed on the cutting blade 4 so as to form a honing face 9, and the honing face 9 is formed so as to gradually rise in the direction of the insert center line C from the flank face 3 toward the rake face 2. Moreover, the honing face 9 has a first convex curved face 9A continuous with the rake face 2 and a second convex curved face 9B continuous with the flank face 3, and as shown in Fig. 7, in a cross section perpendicular to the cutting blade 4, the honing face 9 is formed such that a curvature radius R1 of the first convex curved face 9A is larger than a curvature radius R2 of the second convex curved face 9B.

Here, in the present embodiment, each of the first and second convex curved faces 9A and 9B is formed in an arc-shaped cross section having each of the constant curvature radii R1 and R2, and the honing face 9 is formed by the first and second convex curved faces 9A and 9B. That is, as shown in Fig. 7, the first convex curved face 9A comes into contact with the bottom surface 8A of the breaker groove 8 which is inclined to gradually retreat in the direction of the insert center line C as being separated from the honing face 9 toward the inside of the rake face 2, the second convex curved face 9B comes into contact with the flank face 3, and the first and second convex curved faces 9A and 9B are formed so as to come into contact with each other. In addition, in the cross section orthogonal to the cutting blade 4, lengths along the arcs of the first and second convex curved faces 9A and 9B are formed such that the length of the first convex curved face 9A is longer than the length of the second convex curved face 9B.

In addition, as shown in Fig. 8, in the second cutting blade portion 4B, a land (positive land) 10 which gradually retreats in the direction of the insert center line C from the flank face 3 side toward the rake face 2 is formed, and the land 10 intersects the bottom surface 8A of the breaker groove 8 at an obtuse angle near to a straight angle therebetween. In addition, a third convex curved face 9C is formed between the land 10 and the flank face 3, and the third convex curved face 9C is also formed in an arc shape having a constant curvature radius R3 in the cross section orthogonal to the cutting blade 4. However, the curvature radius R3 of the third convex curved face 9C is set so as to be smaller than the curvature radius R1 of the first convex curved face 9A.

In addition, when viewed from the direction facing the rake face 2 in the direction of the insert center line C, the first cutting blade portion 4A and the second cutting blade portion 4B intersect each other so as to be bent at a slightly obtuse angle in a case where the first and second cutting blade portions 4A and 4B have linear shapes, and the second cutting blade portions 4B intersect the first cutting blade portion 4A so as to be similarly bent at an obtuse angle or is formed so as to come into contact with the first cutting blade portion 4A in a case where the second cutting blade portion 4B has a convex curve shape. A length from the one end portion A to the intersection or the contact between the first and second cutting blade portions 4A and 4B is longer than the length from the intersection or the contact to the other end portion B, that is, the first cutting blade portion 4A has a length which is 1/2 or more of a length of the cutting blade 4. In addition, in the portion in which the first and second convex curved face 9A and 9B intersect each other, a transition region may be formed in which the sectional shape of the cutting blade 4 is continuously changed from the honing face 9 of the first cutting blade portion 4A toward the land 10 of the second cutting blade portion 4B and the third convex curved face 9C.

In addition, in each of corner portions having a square face (polygon face) configured of the rake face 2, a corner blade 4C having a convex curve such as 1/4 arc or the like when viewed from the direction facing the rake face 2 is formed so as to come into contact with the first and second cutting blade portions 4A and 4B on both end portions A and B of two adjacent cutting blades 4. Moreover, a width of the honing face 9 of the first cutting blade portion 4A is wider than a width of land 10 of the second cutting blade portion 4B, and the breaker groove 8 is formed such that the width of the breaker groove 8 gradually increases from the one end portion A of the cutting blade 4 toward the other end portion B.

In the cutting edge replacement type drill of an embodiment of the present invention to which the drill insert of the first embodiment is detachably attached, the drill body 11 is formed of a metal material such as a steel material, and the distal portion of the drill body 11 has a columnar shaped outline about an axis O. In the cutting edge replacement type drill, a rear end portion (not shown) is a shank portion and is held by a main spindle of a machine tool, the rear end portion moves to the distal side (lower side in the Figs. 9, 11, and 12) in the direction of the axis O while rotating in a drill rotation direction T around the axis O, and a workpiece such as stainless steel is drilled by the drill insert which is attached to the distal portion of the drill body 11.

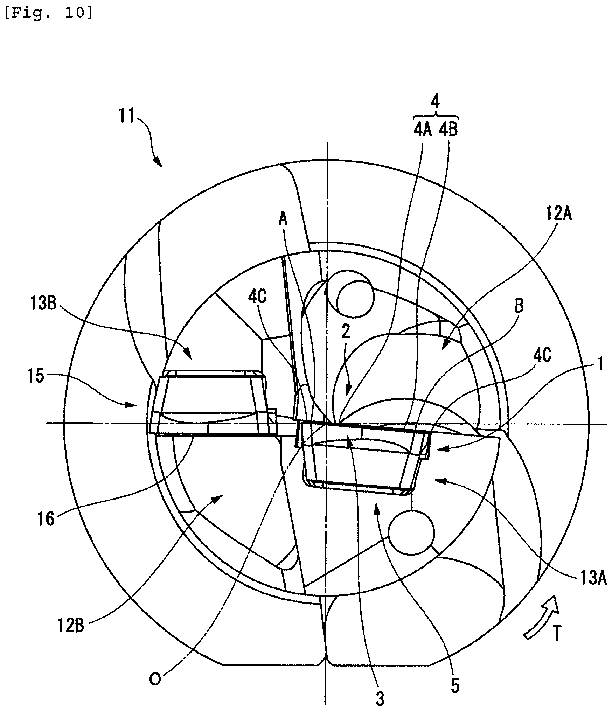

A pair of scrape discharge grooves 12A and 12B is formed on the outer circumference of the distal portion of the drill body 11, and in the present embodiment, the scrape discharge grooves 12A and 12B are formed so as to be slightly twisted to the rear side in the drill rotation direction T around the axis O toward the rear end side on the sides opposite to each other with an interval therebetween in the circumferential direction. In the pair of scrape discharge grooves 12A and 12B, an inner circumferential insert attachment seat 13A which opens to the distal face of the drill body 11 is formed on the distal inner circumferential portion of a wall face of one scrape discharge groove (right upper scrape discharge groove in Fig. 10) 12A in the drill rotation direction T, and an outer circumferential insert attachment seat 13B which opens to the distal face and the outer circumferential surface of the drill body 11 is formed on the distal outer circumferential portion of a wall face of the other scrape discharge groove (left lower scrape discharge groove in Fig. 10) 12B in the drill rotation direction T.

Screw holes 13C is formed on bottom surfaces of the inner and outer circumferential insert attachment seats 13A and 13B in the drill rotation direction T. In addition, the rake face 2 is directed to the drill rotation direction T, as described above, one among the four cutting blades 4 protrudes from the distal end of the drill body 11 and is seated on the inner circumferential insert attachment seat 13A, a clamp screw 14 inserted into the attachment hole 6 is screwed to the screw hole 13C, and the drill insert of the first embodiment is detachably attached to the drill body 11.

In addition, in the attached drill insert of the first embodiment, when viewed from the drill rotation direction T facing the rake face 2, as shown in Fig. 9, in the cutting blade 4 which protrudes from the distal end of the drill body 11, the one end portion A is positioned in the vicinity of the axis O, the outer end portion B is positioned on the outer circumferential side of the drill body 11, and the first cutting blade portion 4A intersects the axis O and is disposed in the vicinity of the axis O. Moreover, in the cutting blade 4 which protrudes from the distal end of the drill body 11, the other end portion B is positioned on the most distal end in the direction of the axis O, and the cutting blade 4 is disposed so as to be gently inclined to the rear end side in the direction of the axis toward the one end portion A. Moreover, the first cutting blade portion 4A extends over the axis O from the intersection between the first and second cutting blade portions 4A and 4B toward the inner circumferential side of the drill body 11, that is, the one end portion A is positioned on the side opposite to the axis with respect to the intersection.

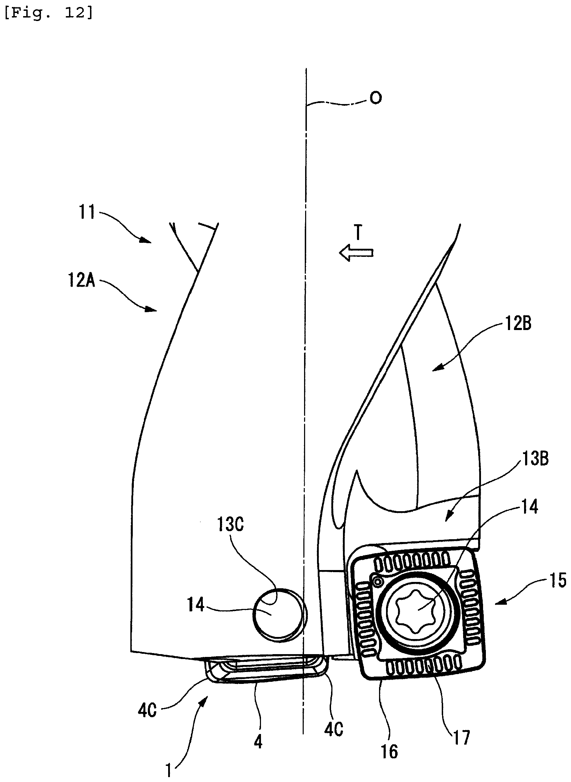

Meanwhile, an outer circumferential drill insert is also detachably attached to the outer circumferential insert attachment seat 13B by the clamp screw 14. Similarly to the drill insert of the first embodiment, an insert body 15 of the outer circumferential drill insert is formed in a square plate shape using a hard material such as sintered hard alloy. However, differently from the first embodiment, in the outer circumferential drill insert, the present embodiment does not have the first cutting blade portion 4A having the honing face 9 of the first embodiment, and as shown in Fig. 12, chip breakers 17 are formed on the rake face in the drill rotation direction T along cutting blades 16.

In the outer circumferential drill insert, one cutting blade 16 protrudes from the distal end of the drill body 11, the one cutting blade 16 is positioned on the slightly further rear end side with respect to the protruding cutting blade 4 of the drill insert of the first embodiment shown in Fig. 9, and the outer circumferential drill insert is attached to the drill body such that rotation trajectories around the axis O overlap each other. In addition, the outer circumferential end of the one cutting blade 16 of the attached outer circumferential drill insert slightly further protrudes from the outer circumferential side relative to the outer circumference of the distal portion of the drill body 11.

Accordingly, in the cutting edge replacement type drill of the embodiment of the present invention configured as described above, as shown in Fig. 9, the inner circumferential portion of a hole drilled in the workpiece is cut by the drill insert of the first embodiment, and the outer circumferential portion of the hole is cut by the outer circumferential drill insert. Accordingly, in the cutting blade 4 which protrudes from the distal end of the drill body 11 of the inner circumferential drill insert of the first embodiment, particularly, a circumferential speed and a cutting speed approach zero in the first cutting blade portion 4A on the axis O side intersecting the axis O, and a cutting load or cutting resistance increases. However, in the first cutting blade portion 4A, the first convex curved face 9A continuous with the rake face 2 and the second convex curved face 9B continuous with the flank face 3 are provided, and the honing face 9 which gradually rises from the flank face 3 toward the rake face 2 is formed. Accordingly, it is possible to ensure sufficient chipping resistance with respect to the cutting load or the cutting resistance.

That is, since the honing face 9 gradually rises in the direction of the insert center line C from the flank face 3 toward the rake face 2, first, it is possible to increase a lip angle between the honing face 9 which substantially functions as a cutting blade edge in the first cutting blade portion 4A and the flank face 3. In addition, since the second convex curved face 9B continuous with the flank face 3 is formed on the intersection ridge portion between the honing face 9 of the first cutting blade portion 4A and the flank face 3, strength of the cutting blade is ensured, and it is possible to obtain sufficient chipping resistance with respect to the cutting load or the cutting resistance.

In addition, the first convex curved face 9A continuous with the rake face 2 is formed on the rake face 2 side of the honing face 9, and the curvature radius R1 of the first convex curved face 9A is larger than the curvature radius R2 of the second convex curved face 9B. Accordingly, since the first convex curved face 9A has the arc which is more gentle than that of the second convex curved face 9B in the cross section orthogonal to the cutting blade 4, friction resistance decreases when scraps or chips scratch the honing face 9, and it is possible to prevent cutting heat due to the friction from increasing. Accordingly, it is possible to prevent occurrence of welding even if the workpiece is stainless steel, and it is possible to prevent damage of the cutting blade 4 due to the welding.

Moreover, in the drill insert of the first embodiment, since the first cutting blade portion 4A has the length which is 1/2 or more of the length of the cutting blade 4 protruding from the distal end of the drill body 11, when the drill insert is attached to the inner circumferential side of the distal portion of the drill body 11, the first cutting blade portion 4A having a sufficient length can be disposed in the vicinity of the axis O, and it is possible to further reliably ensure the chipping resistance. That is, if the length of the first cutting blade portion 4A is less than 1/2 of the entire length of one cutting blade 4, when an excessive cutting load or cutting resistance is applied, there is a concern that it is not possible to reliably ensure the chipping resistance on the other end portion B side of the cutting blade 4 rather than the first cutting blade portion 4A.

Moreover, since the breaker groove 8 which has the bottom surface 8A continuous with the honing face 9 is formed on the rake face 2, and the bottom surface 8A of the breaker groove 8 is inclined to gradually retreat in the direction of the insert center line C as the bottom surface is separated from the honing face 9, even when the honing face 9 which gradually rises in the direction of the insert center line C is formed on the first cutting blade portion 4A to ensure the chipping resistance, it is possible to prevent the cutting resistance from increasing more than is needed. In addition, the bottom surface 8A has the convex curved face of the curvature radius R1 on the honing face 9 side and may come into contact with the first convex curved face 9A as described above, or may intersect the first convex curved face 9A at an obtuse angle.

Meanwhile, in the present embodiment, with respect to the first cutting blade portion 4A of the one end portion A side of the cutting blade 4 in which the chipping resistance is ensured, in the second cutting blade portion 4B on the other end portion B side of the cutting blade 4 which is disposed on the outer circumferential side of the distal end of the drill body 11, the land 10 is formed, which is inclined so as to gradually retreat in the direction of the insert center line C from the flank face 3 side toward the rake face 2. Accordingly, it is possible to increase sharpness of the cutting blade 4 on the outer circumferential side of the cutting blade 4 in which is a certain degree of circumferential speed is generated to ensure the cutting speed, and even when much more scraps are generated on the outer circumferential side than the vicinity of the axis O, it is possible to further decrease the cutting resistance.

In addition, although the positive land 10 is formed on the second cutting blade portion 4B, in the present embodiment, since the third convex curved face 9C is formed on the intersection ridge portion between the land 10 and the flank face 3, it is possible to prevent damage of the cutting blade 4 on the second cutting blade portion 4B. In addition, since the curvature radius R3 of the third convex curved face 9C is smaller than the curvature radius R3 of the first convex curved face 9A in the first cutting blade portion 4A, it is possible to prevent the cutting resistance from increasing more than is needed while preventing damage of the cutting blade 4 on the second cutting blade portion 4B.

In addition, in the cutting edge replacement type drill of the present embodiment, the outer circumferential drill insert is provided, which is positioned on the outer circumferential side of the drill body 11 from the second cutting blade portion 4B of the drill insert of the first embodiment and cuts the outer circumferential portion of the drilled hole. Since the outer circumferential drill insert does not have the first cutting blade portion 4A having the honing face 9 of the first embodiment and the chip breakers 17 are formed on the rake face along the cutting blade 16, even when the outer circumferential drill insert is separated from the axis O and much more scraps are generated in the outer circumferential drill insert than in the drill insert of the first embodiment, it is possible to reliably remove the scraps. However, according to machining conditions or the like, the drill insert of the first embodiment may be attached to the outer circumferential insert attachment seat 13B.

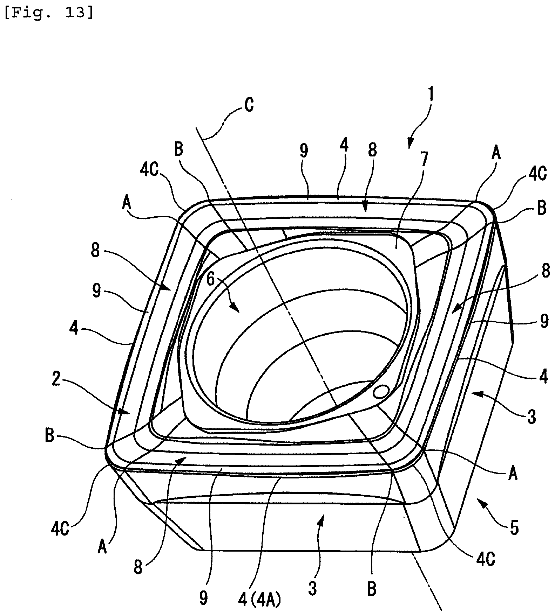

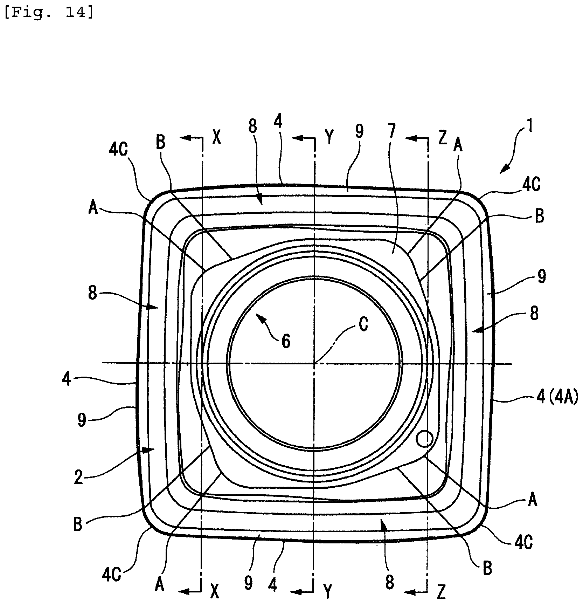

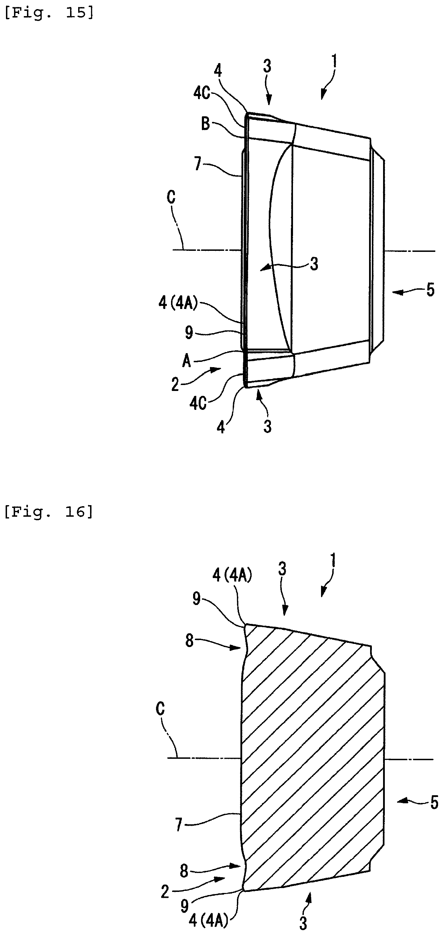

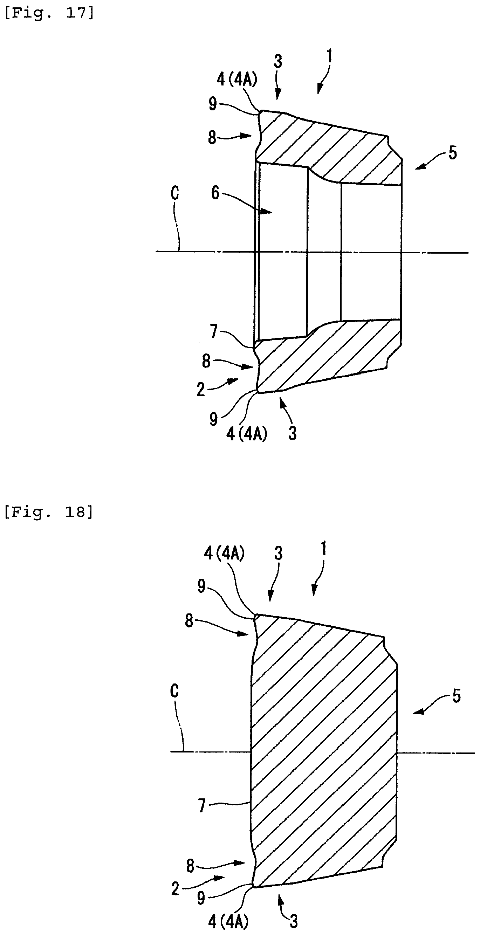

Moreover, in the drill insert of the first embodiment, the second cutting blade portion 4B in which the land 10 is formed on the other end portion B side of the cutting blade 4 is provided. However, in a case where there is a concern that a large cutting load or large cutting resistance is applied to the entire length of the cutting blade 4 of the drill insert attached to the inner circumferential side of the drill body 11 according to machining conditions, the size of the insert body 1, the length of the cutting blade 4, or the like, as a drill insert of a second embodiment of the present invention shown in Figs. 13 to 18, the entire length of the cutting blade 4 may be the first cutting blade portion 4A on which the honing face 9 is formed, which includes the first convex curved face 9A continuous with the rake face 2 and the second convex curved face 9B continuous with the flank face 3 and gradually rises from the flank face 3 toward the rake face 2. In addition, in the second embodiment, the same reference numerals are assigned to the portions common to the first embodiment.

Accordingly, in the drill insert of the second embodiment, the shape of the cross section over the entire length of the cutting blade 4 is the shape shown in Fig. 7, and it is possible to ensure chipping resistance with respect to a cutting load or cutting resistance and chipping resistance with respect to welding. Accordingly, it is possible to provide a drill insert having a longer service life. In addition, in the second embodiment, the curvature radii R1 and R2 of the first and second convex curved faces 9A and 9B or the width of the honing face 9 are approximately constant over the entire length of the cutting blade 4.

Moreover, in a case where there is a concern that a large cutting load or large cutting resistance is applied to a portion exceeding the entire length of the cutting blade 4 of the drill insert attached to the inner circumferential side of the drill body 11, the drill insert of the second embodiment is attached to the inner circumferential side of the drill body 11, the drill insert of the first embodiment instead of the outer circumferential drill insert of the cutting edge replacement type drill of the embodiment may be attached to the outer circumferential side. In this case, it is possible to ensure high chipping resistance within a range from the vicinity of the axis O of the drill body 11 to the first cutting blade portion 4A of the outer circumferential drill insert of the first embodiment. Of course, the drill insert of the second embodiment may be attached to both the inner and outer circumferential insert attachment seats 13A and 13B of the drill body 11.

In addition, in a case where the inner diameter of the drilled hole is small, the outer diameter of the distal portion of the drill body 11 is small, and a large cutting load or large cutting resistance is applied to only the vicinity of the axis O, the drill insert of the first embodiment may be attached to the drill body 11 of the cutting edge replacement type drill having one blade in which only the inner circumferential insert attachment seat 13A is formed. In addition, in a case where a large cutting load or large cutting resistance is applied to the entire length of the cutting blade 4 even through the inner diameter of the drilled hole is small, the drill insert of the second embodiment may be attached to the cutting edge replacement type drill having one blade.

### Reference Signs List

1: insert body
2: rake face
3: flank face
4: cutting blade
4A: first cutting blade portion
4B: second cutting blade portion
4C: corner blade
8: breaker groove
8A: bottom surface of breaker groove 8
9: honing face
9A: first convex curved face
9B: second convex curved face
9C: third convex curved face
10: land
11: drill body
13A, 13B: inner and outer circumferential insert attachment seat
A: one end portion of cutting blade 4
B: other end portion of cutting blade 4
C: insert center line
R1 to R3: curvature radii of first to third convex curved faces 9A to 9C
O : axis of drill body 11
T: drill rotation direction

## Claims

1. A drill insert which is detachably attached to a distal portion of a drill body (11) which is rotated around an axis (O),
wherein a polygon face of a polygonal plate-shaped insert body (1) is a rake face (2), a side face of the insert body (1) disposed around the rake face (2) is a flank face (3), and a cutting blade (4) is formed on a ridge portion in which the rake face (2) and the flank face (3) intersect each other,
wherein the cutting blade (4) includes a honing face (9) which is formed on a first cutting blade portion (4A) continuous with at least one end portion of both end portions of the cutting blade (4) and which gradually rises from the flank face (3) toward the rake face (2),
wherein the honing face (9) includes a first convex curved face (9A) continuous with the rake face (2) and a second convex curved face (9B) continuous with the flank face (3), and
wherein in a cross section orthogonal to the cutting blade (4), a curvature radius (R1) of the first convex curved face (9A) is larger than a curvature radius (R2) of the second convex curved face (9B), **characterised in that** a positive land (10) which gradually retreats from the flank face (3) side toward the rake face (2) is formed on a second cutting blade portion (4B) continuous with the other end portion (B) of both end portions of the cutting blade (4).

2. The drill insert according to claim 1,
wherein the first cutting blade portion (4A) has a length which is 1/2 or more of a length of the cutting blade (4).

3. The drill insert according to claim 1 or 2,
wherein a breaker groove (8) which has a bottom surface (8A) continuous with the honing face (9) is formed on the rake face (2), and the bottom surface (8A) of the breaker groove (8) is inclined to gradually retreat as the bottom surface (8A) is separated from the honing surface.

4. The drill insert according to one of claims 1 to 3,
wherein a third convex curved face (9C) is formed between the flank face (3) and the land in the second cutting blade portion (4B), and in the cross section orthogonal to the cutting blade (4), a curvature radius (R3) of the third convex curved face (9C) is smaller than the curvature radius (R1) of the first convex curved face (9A) on the honing face (9).

5. A cutting edge replacement type drill,
wherein the drill insert according to any one of claims 1 to 4 is detachably attached to a distal portion of a drill body (11) which is rotated around an axis (O) such that the cutting blade (4) protrudes from the distal end of the drill body (11), the one end portion (A) of the cutting blade (4) is positioned in the vicinity of the axis (O) and the other end portion (B) of both end portions of the cutting blade (4) is positioned on the outer circumferential side of the drill body (11) when viewed from a rotation direction (T) of the drill body (11), and the first cutting blade portion (4A) and the axis (O) intersect each other.

## Patentansprüche

1. Bohreinsatz, der abnehmbar an einem distalen Abschnitt eines Bohrkörpers (11), der um eine Achse (O) gedreht wird, angebracht ist,
wobei eine Vieleckfläche eines vieleckigen plattenförmigen Einsatzkörpers (1) eine Spanfläche (2) ist, eine Seitenfläche des Einsatzkörpers (1), die um die Spanfläche (2) angeordnet ist, eine Flankenfläche (3) ist, und eine Schneidklinge (4) auf einem Rippenabschnitt gebildet ist, in dem die Spanfläche (2) und die Flankenfläche (3) einander schneiden,
wobei die Schneidklinge (4) eine Honfläche (9) beinhaltet, die auf einem ersten Schneidklingenabschnitt (4A) gebildet ist, der sich mit mindestens einem Endabschnitt beider Endabschnitte der Schneidklinge (4) fortsetzt und sich allmählich von der Flankenfläche (3) zu der Spanfläche (2) erhebt,
wobei die Honfläche (9) eine erste konvexe gekrümmte Fläche (9A) beinhaltet, die sich mit der Spanfläche (2) fortsetzt, und eine zweite konvexe gekrümmte Fläche (9B), die sich mit der Flankenfläche (3) fortsetzt, und
wobei in einem Querschnitt orthogonal zu der Schneidklinge (4) ein Krümmungsradius (R1) der ersten konvexen gekrümmten Fläche (9A) größer ist als ein Krümmungsradius (R2) der zweiten konvexen gekrümmten Fläche (9B), **dadurch gekennzeichnet, dass** eine positive Kontaktfläche (10), die allmählich von der Seite der Flankenfläche (3) zu der Spanfläche (2) zurückweicht, auf einem zweiten Schneidklingenabschnitt (4B), der mit dem anderen Endabschnitt (B) der beiden Endabschnitte der Schneidklinge (4) fortgesetzt ist, gebildet ist.

2. Bohreinsatz nach Anspruch 1,
wobei der erste Schneidklingenabschnitt (4A) eine Länge aufweist, die 1/2 oder mehr einer Länge der Schneidklinge (4) beträgt.

3. Bohreinsatz nach Anspruch 1 oder 2,
wobei eine Spanleitrille (8), die eine Bodenoberfläche (8A) in Fortsetzung mit der Honfläche (9) aufweist, auf der Spanfläche (2) gebildet ist, und die Bodenoberfläche (8A) der Spanleitrille (8) geneigt ist, um allmählich nach hinten zurückzuweichen, während die Bodenoberfläche (8A) von der Honfläche getrennt wird.

4. Bohreinsatz nach einem der Ansprüche 1 bis 3,
wobei eine dritte konvexe gekrümmte Fläche (9C) zwischen der Flankenfläche (3) und der Kontaktfläche in dem zweiten Schneidklingenabschnitt (4B) gebildet ist, und in dem Querschnitt orthogonal zu der Schneidklinge (4) ein Krümmungsradius (R3) der dritten konvexen gekrümmten Fläche (9C) kleiner ist als der Krümmungsradius (R1) der ersten konvexen gekrümmten Fläche (9A) der Honfläche (9).

5. Bohrer vom Schneidkantenersatztyp,
wobei der Bohreinsatz gemäß einem der Ansprüche 1 bis 4 abnehmbar an einem distalen Abschnitt eines Bohrkörpers (11), der um eine Achse (O) gedreht wird, derart angebracht ist, dass die Schneidklinge (4) von dem distalen Ende des Bohrkörpers (11) vorragt, der eine Endabschnitt (A) der Schneidklinge (4) in der Nähe der Achse (O) positioniert ist, und der andere Endabschnitt (B) beider Endabschnitte der Schneidklinge (4), von einer Rotationsrichtung (T) des Bohrkörpers (11) her betrachtet, auf der äußeren umfänglichen Seite des Bohrkörpers (11) positioniert ist, und der erste Schneidklingenabschnitt (4A) und die Achse (O) einander schneiden.

## Revendications

1. Plaquette de foret qui est fixée de manière amovible à une portion distale d'un corps de foret (11) qui est mis en rotation autour d'un axe (O),
dans laquelle une face polygonale d'un corps de plaquette en forme de plaque polygonale (1) est une face d'attaque (2), une face latérale du corps de plaquette (1) disposée autour de la face d'attaque (2) est une face de dépouille (3), et une lame de coupe (4) est formée sur une portion d'arête dans laquelle la face d'attaque (2) et la face de dépouille (3) se croisent l'une l'autre,
dans laquelle la lame de coupe (4) inclut une face de rodage (9) qui est formée sur une première portion de lame de coupe (4A) se prolongeant par au moins une portion d'extrémité des deux portions d'extrémité de la lame de coupe (4) et qui s'élève progressivement de la face de dépouille (3) vers la face d'attaque (2),
dans laquelle la face de rodage (9) inclut une première face incurvée convexe (9A) se prolongeant par la face d'attaque (2) et une deuxième face incurvée convexe (9B) se prolongeant par la face de dépouille (3), et
dans laquelle, dans une section transversale orthogonale à la lame de coupe (4), un rayon de courbure (R1) de la première face incurvée convexe (9A) est supérieur au rayon de courbure (R2) de la deuxième face incurvée convexe (9B), **caractérisée en ce que**
un appui positif (10) qui recule progressivement du côté face de dépouille (3) vers la face d'attaque (2) est formé sur une seconde portion de lame de coupe (4B) se prolongeant par l'autre portion d'extrémité (B) des deux portions d'extrémité de la lame de coupe (4).

2. Plaquette de foret selon la revendication 1,
dans laquelle la première portion de lame de coupe (4A) présente une longueur qui représente 1/2 ou plus de la longueur de la lame de coupe (4).

3. Plaquette de foret selon la revendication 1 ou 2,
dans laquelle une gorge brise-copeaux (8) qui présente une surface inférieure (8A) se prolongeant par la face de rodage (9) est formée sur la face d'attaque (2), et la face inférieure (8A) de la gorge brise-copeaux (8) est inclinée pour reculer progressivement à mesure que la surface inférieure (8A) se sépare de la surface de rodage.

4. Plaquette de foret selon l'une des revendications 1 à 3,
dans laquelle une troisième face incurvée convexe (9C) et formée entre la face de dépouille (3) et l'appui dans la seconde portion de lame de coupe (4B), et dans la section transversale orthogonale à la lame de coupe (4), un rayon de courbure (R3) de la troisième face incurvée convexe (9C) est inférieur au rayon de courbure (R1) de la première face incurvée convexe (9A) sur la face de rodage (9).

5. Foret du type à remplacement de bord de coupe,
dans lequel la plaquette de foret selon l'une quelconque des revendications 1 à 4 est fixée de manière amovible à une portion distale du corps de foret (11) qui est mis en rotation autour d'un axe (O) de sorte que la lame de coupe (4) fasse saillie depuis l'extrémité distale du corps de foret (11), la portion d'extrémité (A) de la lame de coupe (4) est positionnée à proximité de l'axe (O) et l'autre portion d'extrémité (B) des deux portions d'extrémité de la lame de coupe (4) est positionnée sur le côté circonférentiel externe du corps de foret (11) lorsqu'il est observé depuis une direction de rotation (T) du corps de foret (11), et la première portion de lame de coupe (4A) et l'axe (O) se croisent l'un l'autre.
